# EUROPÄISCHE PATENTSCHRIFT

(11) **EP 0 685 028 B1**
(45) Veröffentlichungstag und Bekanntmachung des Hinweises auf die Patenterteilung: **25.02.1998**
(21) Anmeldenummer: 95905076.6
(22) Anmeldetag: 17.12.1994
(51) Int. Cl.: F02B 31/06, F02M 35/10

(54) **FREMDGEZÜNDETER KOLBENMOTOR MIT RICHTUNGSÄNDERBARER EINSTRÖMUNG DES KRAFTSTOFF-LUFT-GEMISCHES**
SPARK-IGNITION PISTON ENGINE WITH FACILITIES FOR CHANGING THE INLET DIRECTION OF THE FUEL-AIR MIXTURE
MOTEUR A PISTON A ALLUMAGE PAR BOUGIES, DONT LE SENS D'ADMISSION DU MELANGE CARBURANT-AIR PEUT ETRE MODIFIE

(30) Priorität: 20.12.1993 DE 9319545 U
(43) Veröffentlichungstag der Anmeldung: 06.12.1995
(73) Patentinhaber: FEV Motorentechnik GmbH & Co. KG, D-52078 Aachen (DE)
(72) Erfinder: ENDRES, Helmut, D-52134 Herzogenrath (DE); NEUSSER, Heinz-Jakob, D-52072 Aachen (DE); WURMS, Rainer, D-53227 Bonn (DE)
(74) Vertreter: Langmaack, Jürgen, Dipl.-Ing.
(86) Internationale Anmeldenummer: EP9404202
(87) Internationale Veröffentlichungsnummer: WO9517589

(56) Entgegenhaltungen:
- EP-A- 0 094 002
- DE-A- 2 921 300
- DE-A- 3 347 112
- DE-A- 3 701 674
- DE-A- 4 313 849
- DE-B- 2 035 939
- FR-A- 1 472 204
- GB-A- 2 087 476
- US-A- 4 641 620
- PATENT ABSTRACTS OF JAPAN vol. 17, no. 651 (M-1519) 3. Dezember 1993 & JP,A,05 209 582 (MAZDA) 20. August 1993
- PATENT ABSTRACTS OF JAPAN vol. 10, no. 385 (M-548) (2442) 24. Dezember 1986 & JP,A,61 175 233 (HINO) 6. August 1986
- PATENT ABSTRACTS OF JAPAN vol. 8, no. 240 (M-336) (1677) 6. November 1984 & JP,A,59 120 718 (HINO) 12. Juli 1984
- PATENT ABSTRACTS OF JAPAN vol. 4, no. 72 (M-13) 27. Mai 1980 & JP,A,55 035 177 (TOYOTA) 12. März 1980
- PATENT ABSTRACTS OF JAPAN vol. 11, no. 215 (M-606) 11. Juli 1987 & JP,A,62 032 222 (FUJI) 12. Februar 1987
- PATENT ABSTRACTS OF JAPAN vol. 18, no. 297 (M-1617) 7. Juni 1994 & JP,A,06 058 153 (MITSUBISHI) 1. März 1994

## Beschreibung

Die Erfindung betrifft einen fremdgezündeten Hubkolbenmotor mit wenigstens einer Einlaßöffnung je Zylinder, die jeweils durch ein Einlaßventil verschließ- und öffenbar ist, der ein kanalförmiger Einlaß für Luft und/oder ein Luft-Kraftstoff-Gemisch zugeordnet ist, der mit Mitteln in Verbindung steht, die eine steuerbare Ablenkung der Strömung beim Übertritt aus dem Einlaß durch die Einlaßöffnung in den Zylinder ermöglichen, entsprechend dem Oberbegriff des Anspruchs 1.

Ein Motor der vorstehend bezeichneten Art ist aus der WO 91/14858 bekannt. Die Mittel zur Ablenkung der Strömung bestehen bei der vorbekannten Einrichtung aus Schiebern, Klappen, Schwenkdüsen oder dergleichen, die im kanalförmigen Einlaß unmittelbar vor der Einlaßöffnung angeordnet sind. Diese Elemente werden über entsprechende Stellmittel in Abhängigkeit vom Betriebszustand des Motors betätigt, um durch eine Ablenkung des durch den kanalartigen Einlaß strömenden Luft-Kraftstoff-Gemisches, nachstehend immer als Gasstrom bezeichnet, unter bestimmten Betriebszuständen so abzulenken, daß sich innerhalb des Zylinderraumes während des Ansaugtaktes ein Walzenwirbel ausbildet, dessen Drehachse quer zur Zylinderachse verläuft. Der Nachteil dieser Anordnung besteht darin, daß die Betätigungsmittel im Einlaß unmittelbar vor der Einlaßöffnung angeordnet und gelagert sind, also in einem Bereich, in dem ohnehin für zusätzliche Bauteile nur wenig Raum zur Verfügung steht.

Aus JP-A-5 209 582 ist ein Hubkolbenmotor bekannt, bei dem der Einlaßkanal vor dem Einlaßventil im Bereich der Kraftstoffeinspritzdüse durch eine feststehende poröse Zwischenwand in zwei Teilkanäle unterteilt ist. Eine Beeinflussung der Aufteilung des dem Zylinder zuzuführenden Gasstromes erfolgt über eine Stellklappe am Eintritt des unteren Teilkanals, die auch in voll geöffneter Stellung nicht nur den freien Strömungsquerschnitt beeinträchtigt, sondern durch störende Wirbel Gasstrom in diesem Teilkanal erzeugt und somit unerwünschte Strömungsverluste bewirkt.

Der Erfindung liegt nun die Aufgabe zugrunde, einen Hubkolbenmotor der eingangs bezeichneten Art hinsichtlich der Ablenkungsmöglichkeiten der Gasströmung beim Eintritt in den Zylinder zu verbessern.

Diese Aufgabe wird gemäß der Erfindung gelöst mit den im Anspruch 1 angegebenen Mitteln. Diese Anordnung hat den Vorteil, daß die Strömung durch mindestens eine veränderbare Massenverteilung auf die beiden der Teilkanäle gezielt einem Abschnitt des Ventilspaltbereiches zugeleitet wird und die Verteilung der in den Zylinder einströmenden Ladungsmasse über eine Einstellung der Endkante der Trennwand zum Ventil spalt verändert werden kann. Da die Verteilung der Ladungsmasse über dem Ventilspalt die Ausbildung eines Wirbels im Zylinder bestimmt, kann durch Veränderung der Massenverteilung auf den beiden, jeweils einem Teilkanal zugeordneten Ventil spalten die Wirbelausbildung und Wirbelintensität im Zylinder gesteuert werden. Gleichzeitig ist die Möglichkeit gegeben, den Grad der Vermischung der unterschiedlichen Ladungsbestandteile zu beeinflussen. Hierdurch wird erreicht, daß die Massenverteilung auf den oberen und unteren Ventilspaltbereich beeinflußt wird. Bei einem größeren Massenanteil durch den oberen Ventilspaltbereich bildet sich im Zylinder des Motors ein Walzenwirbel (Tumble) aus, welcher die Verbrennung günstig beeinflussen kann und eine, wenn gewollt, stabile Schichtung zwischen Luft, Kraftstoff und/oder Abgas ermöglicht. Die Wirbelausbildung bei verengter Massenverteilung auf den Ventil spalt des unteren Teilkanals führt darüber hinaus zu einem günstigen Brennverhalten bei geringen Motorlasten (Teillast). Bei Vollast sollen keine intensiven Wirbel erzeugt werden, d. h., der Ventilspalt beider Teilkanäle ist gleich eingestellt. Der besondere Vorteil dieser Anordnung besteht vor allem darin, daß die Mittel zur Veränderung der Massenverteilung auf die beiden Teilkanäle nicht unmittelbar vor der Einlaßöffnung im Einlaß angeordnet werden müssen, sondern mit einem gewissen Abstand hierzu, so daß hier größere Gestaltungsmöglichkeiten bei der Konstruktion zur Verfügung stehen. Ein weiterer Vorteil der Erfindung besteht darin, daß die notwendigen Einbauten im Einlaßkanal den freien Strömungsquerschnitt nur geringfügig verkleinern, so daß nur geringe zusätzliche Strömungsverluste auftreten. Schon aus baulichen Gründen steht der vorzugsweise obenliegende erste Teilkanal mit der Kraftstoffzufuhr in Verbindung, beispielsweise in der Weise, daß eine Kraftstoffeinspritzdüse in diesen Kanal ausmündet. Je nach Betriebszustand strömt nunmehr bei geschlossenem oder nur geringfügig geöffnetem zweiten Teilkanal das Kraftstoff-Luft-Gemisch durch den obenliegenden ersten Teilkanal und wird hierbei vornehmlich dem obenliegenden Ventilspaltbereich zugeleitet. In dem Maße, wie über den darunter liegenden zweiten Teilkanal die Zufuhr von Luft oder auch von Abgas erhöht wird, wird auch die im unteren Ventilspaltbereich zugeleitete Ladungsmasse erhöht, so daß entsprechend der Erhöhung der Gasströmung durch den zweiten Teilkanal die Wirbelausbildung im Zylinder verringert wird. Die Endkante der Teilungsebene kann bis dicht an den Schaft des Einlaßventils oder auch darüber hinaus hereingeführt werden, so daß die Strömung durch den ersten (obenliegenden) Teilkanal direkt in den obenliegenden Bereich des Ventilspaltes geleitet wird. Hierdurch wird im Zylinder selbst ein starker Walzenwirbel erzeugt. Durch Steuerung der Verteilung der angesaugten Ladungsmasse auf die beiden Teilkanäle kann die Intensität des Walzenwirbels stufenlos beeinflußt werden. In Abhängigkeit der konstruktiven Gestaltung der Kanaltrennung und/oder der Wahl des Zeitpunktes der Kraftstoffzuführung (Einspritzzeitpunkt) kann die Vermischung des Kraftstoff-Luft-Gemisches oder des Abgas-Kraftstoff-Luftgemisches beeinflußt werden. Hierbei kann sowohl eine intensive Vermischung (homogenes Gemisch), wie auch eine starke Schichtung der Gemische erzielt werden. Die Erfindung erlaubt es ferner, in mindestens einen Teilkanal Abgas einzuleiten und in Abhängigkeit der konstruktiven Gestaltung oder der Veränderung der Querschnittsaufteilung der Teilkanäle eine mehr oder minder starke Schichtung des Abgas-Luft-Kraftstoffgemisches zu erzielen. Die Erfindung erlaubt es ferner, bei der Anordnung von mehreren Einlaßventilen je Zylinder entweder einen gemeinsamen Einlaß für alle Einlaßventile in der Weise vorzusehen, daß für alle Einlaßventile ein gemeinsamer Einlaßbereich vorhanden ist, in dem die Teilungsebene endet. Es ist in gleicher Weise aber auch möglich, jedes Einlaßventil mit einem eigenen Einlaß zu versehen, der in zwei Teilkanäle unterteilt ist.

Während die Veränderung der Strömungsrichtung des in den Zylinder einströmenden Gasstromes grundsätzlich über eine Veränderung des Volumenstroms durch den zweiten Strömungskanal bewirkt werden kann und zwar dadurch, daß über entsprechende Stellmittel die Kanalquerschnitte mehr oder weniger gleichgroß eingestellt werden, freigegeben wird, besteht gemäß der Erfindung die Möglichkeit, daß die Trennwand beweglich - vorzugsweise längsbeweglich - im Einlaßkanal angeordnet ist und mit einem steuerbaren Stellmittel in Verbindung steht, so daß der Abstand ihrer Endkante zur Einlaßöffnung im Einlaßbereich veränderbar ist. Hierdurch besteht die Möglichkeit, bei einer zentralen Beeinflussung des Volumenstroms für den Einlaßkanal vor der Trennwand, die sich auch nur über eine Teillänge des Einlaßkanals erstrecken kann, die ablenkende Wirkung der nach unten gerichteten Krümmung der Kanalwandung mehr odr weniger stark wirksam werden zu lassen und zwar dadurch, daß die Gasströmung durch den zweiten Teilkanal in kürzerem oder weiterem Abstand zur Einlaßöffnung den führenden Einfluß der Trennwand verliert. Anstelle einer Längsbewegung der Trennwand, die zu einer Veränderung des strömungsführenden Einflusses der Trennwand insbesondere des Einflusses der Endkante im Einlaßbereich führt, ist es in einer anderen Ausgestaltung der Erfindung möglich, die Trennwand senkrecht zur Teilungsebene im Einlaßkanal bewegbar anzuordnen und mit entsprechenden steuerbaren Stellmitteln zu verbinden. Die Beeinflussung der Einströmungsrichtung erfolgt bei dieser Anordnung ebenfalls durch eine Veränderung der Mengenverhältnisse der durch den ersten und den zweiten Kanal strömenden Volumenströme. Wird der Volumenstrom durch den zweiten Kanal dadurch vergrößert, daß die Trennwand quer zu ihrer Fläche gegen die Wandung des ersten Teilkanals bewegt und damit der Strömungsquerschnitt dieses ersten Teilkanals reduziert wird, ergibt sich ebenfalls eine überwiegend in Richtung des Einlaßkanals erfolgende Einströmung des Gasstromes in den Zylinder und damit eine entsprechende Wirbelausbildung.

Unter Ausnutzung der Tatsache, daß die Endkante der Trennwand im Einlaßbereich einer erhöhten Temperatureinwirkung ausgesetzt ist, ist in einer anderen Ausgestaltung der Erfindung vorgesehen, daß im Bereich der der Einlaßöffnung zugekehrten Endkante der Trennwand eine Bi-Metallfahne angeordnet ist, die bei kaltem Motor des Strömungsquerschnitt des zweiten Teilkanals zumindest teilweise verschließt und mit zunehmender Erwärmung freigibt. Diese Anordnung hat den Vorteil, daß das Mittel zur Veränderung des Strömungsquerschnitts zugleich auch das Stellmittel in Form der Bi-Metallfahne darstellt.

In weiterer vorteilhafter Ausgestaltung der Erfindung ist vorgesehen, daß insbesondere bei einem Hubkolbenmotor mit Kraftstoffeinspritzung die Trennwand beheizbar ist. Da schon aus baulichen Gründen die Einspritzdüse für den Kraftstoff nicht in Strömungsrichtung im Teilkanal erfolgen kann, sondern unter einem gewissen Winkel ausgerichtet erfolgt, bietet die Anordnung einer beheizbaren Trennwand den Vorteil, daß auf die Trennwand auftreffende Kraftstofftröpfchen verdampft werden und somit die Gemischbildung verbessert wird.

Die Erfindung wird anhand schematischer Zeichnungen von Ausführungsbeispielen näher erläutert. Es zeigen:
- Fig. 1, 2 und 3: in einem vertikalen Teilausschnitt den Zylinderkopfbereich eines Einlaßventils mit unterschiedlichen Stellmitteln bekannter Bauart zur Erläuterung der Funktionsweise,
- Fig. 4 und 5: eine erfindungsgemäße Ausführungsform mit bewegbarer Trennwand,
- Fig. 6: eine erfindungsgemäße Ausführungsform mit einer Bi-Metallfahne als Drosselelement,
- Fig. 7: eine Ausführungsform mit einem erfindungsgemäß Turbulenz erzeugenden Einbau.

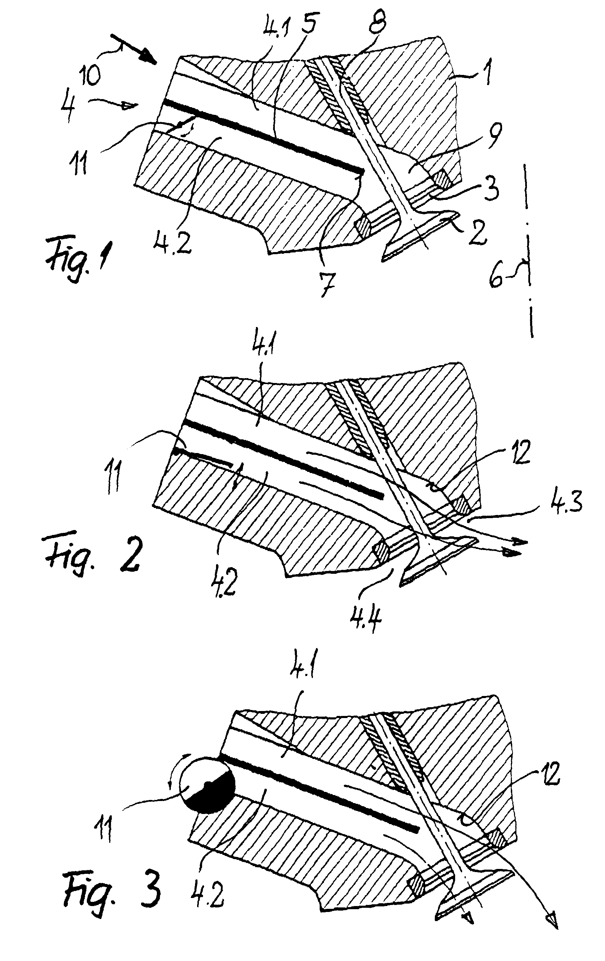

In Fig. 1 ist in einem Teilausschnitt ein Zylinderkopf 1 eines Hubkolbenmotors dargestellt. Der Hubkolbenmotor ist bei den nachfolgend beschriebenen Ausführungsbeispielen jeweils mit einem Einlaßventil 2 je Zylinder versehen, das eine Einlaßöffnung 3 öffnet und verschließt. Die Einlaßöffnung 3 ist einem Einlaßkanal 4 zugeordnet, der bei dem dargestellten Ausführungsbeispiel durch eine Trennwand 5 in einen ersten Teilkanal 4.1 und einen zweiten Teilkanal 4.2 unterteilt ist. Die Trennwand 5 erstreckt sich hierbei mit ihrer Teilungsebene quer zur Achse 6 des Zylinders und endet mit ihrer Endkante 7 unmittelbar vor dem Schaft 8 des Einlaßventils 2. Sie kann auch über das Einlaßventil hinausgehen bzw. deutlich vorher bereits enden. Der unter einem Winkel zur Zylinderachse 6 mit seiner Trennwand 5 verlaufende Einlaßkanal 4 endet in einem Einlaßbereich 9, der im wesentlichen durch eine nach unten in den Zylinder gerichteten Krümmungsbereich gebildet wird, der durch die Einlaßöffnung 3 begrenzt ist.Die Anordnung ist grundsätzlich auch bei mehreren Einlaßventilen je Zylinder anwendbar. In den ersten Teilkanal 4.1 mündet beispielsweise die hier nicht näher dargestellte, sondern nur durch den Pfeil 10 angedeutete Einspritzdüse, so daß durch den Teilkanal 4.1 ein Kraftstoff-Luft-Gemisch in den Zylinder geführt wird. Der Teilkanal 4.2 wird mit Luft, einem Abgas-Luft-Gemisch, einem Luft-Kraftstoff-Gemisch, einem Abgas-Luft-Kraftstoff-Gemisch oder mit rückgeführtem Abgas beaufschlagt, so daß die Mischung des Kraftstoff-Luft-Gemisches des Teilkanals 4.1 und der Luft bzw. des Abgas-Luft-Gemisches bzw. des Luft-Kraftstoff-Gemisches, oder des Abgas-Luft-Kraftstoff-Gemisches bzw. des Abgases aus dem Teilkanal 4.2 frühestens ab dem Zusammenströmen im Einlaßbereich 9 erfolgen kann.

Der Teilkanal 4.2 ist mit einem Mittel 11 zur Veränderung des freien Strömungsquerschnittes wie nach dem Stand der Technik bekannt, mit einer Drosselklappe versehen, die in Abhängigkeit von dem Lastzustand des Motors angesteuert wird. In den Fig. 2 und 3 sind weitere Ausführungsformen derartiger Drosseleinrichtungen 11 dargestellt, beispielsweise in Form einer einfachen Schwenkklappe (Fig. 2) oder in Form eines Walzenschiebers (Fig. 3).

Die unterschiedlichen Strömungsrichtungen des durch den Einlaß 4 geführten Gasstromes sind nun anhand von Fig. 2 - und Fig. 3 für unterschiedliche Öffnungsstellungen des Drosselmittels 11 dargestellt. Durch die unterschiedliche Stellung des Drosselmittels 11 wird erreicht, daß die Massenverteilung auf den oberen 4.3 und unteren 4.4 Ventilspaltbereich beeinflußt wird. Bei einem größeren Massenanteil durch den oberen Ventilspaltbereich bildet sich im Zylinder des Motors ein Walzenwirbel (Tumble) aus, welcher die Verbrennung günstig beeinflussen kann und eine, wenn gewollt, stabile Schichtung zwischen Luft, Kraftstoff und/oder Abgas ermöglicht. Die Wirbelausbildung bei geschlossenem unteren Teilkanal führt darüber hinaus zu einem günstigen Brennverhalten bei geringen Motorlasten (Teillast). Bei Vollast sollen keine intensiven Wirbel erzeugt werden, d. h. beide Teilkanäle sollen offen sein.

Wird nun - wie in Fig. 3 dargestellt - über das Drosselmittel 11 der Volumenstrom durch den Teilkanal 4.2 gegenüber dem Volumenstrom durch den Teilkanal 4.1 reduziert, so wird ein größerer Massenanteil an der Gesamtmasse durch den oberen Ventilspaltbereich 4.3 in den Zylinder geleitet als durch den unteren Ventilspaltbereich 4.4. Über die Verteilung der Ladungsmasse auf die Ventilspaltbereiche wird die Intensität des sich im Zylinder ausbildenden Walzenwirbels gesteuert.

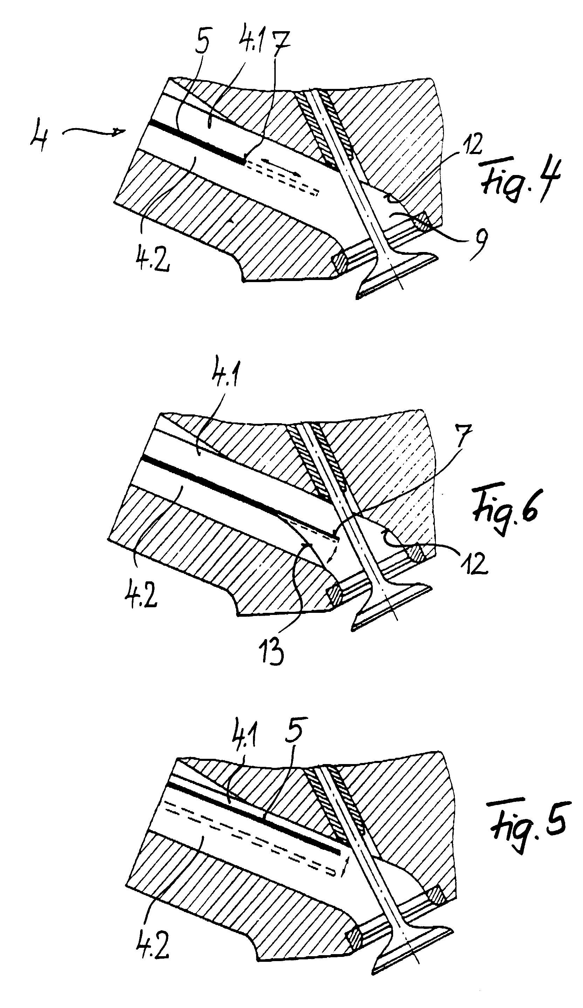

Die erfindungsgemäße Ausführungsform gemäß Fig. 4 entspricht in ihrem Grundaufbau der Ausführungsform gemäß Fig. 1. Der Unterschied besteht hierbei darin, daß die Trennwand 5 im Einlaßkanal 4 längsbeweglich geführt und über entsprechende steuerbare Stellmittel bewegbar ist, so daß durch die Veränderung der Lage des Endkante 7 der strömungsführende Einfluß der Trennwand 5 im Einlaßbereich 9 sich verändert, und zwar abnimmt, je weiter die Vorderkante 7 der Trennwand 5 von der Einlaßöffnung 3 zurückgezogen wird, und zwar auch dann, wenn durch beide Teilkanäle 4.1 und 4.2 jeweils gleiche Volumenströmen strömen.

Es ist ohne weiteres zu erkennen, daß die gezielte Anströmung der Ventilbereiche über die Teilkanäle 4.1 und 4.2 verringert wird und sich eine größere "Vermischungsstrecke" ergibt.

In Fig. 5 ist eine Abwandlung der Anordnung gemäß Fig. 4 dargestellt. Bei dieser Anordnung ist bei im übrigen gleichem Aufbau die Trennwand 5 querbeweglich im Einlaßkanal 4 angeordnet oder fest außerhalb der Kanalmitte installiert, so daß der freie Strömungsquerschnitt des Teilkanals 4.1 vermindert werden kann, bei gleichzeitiger Vergrößerung des freien Strömungsquerschnitts des Teilkanals 4.2. Auch durch diese Veränderung des Gesamtstromes kann die gezielte Anströmung des oberen Ventilspaltbereiches 4.3 mehr oder weniger stark wirksam werden.

Bei der in Fig. 6 dargestellten Ausführungsform ist dann der im Einlaßkanal 4 fest angeordneten Trennwand 5 im Bereich ihrer Endkante 7 eine Bi-Metallfahne 13 zugeordnet, die in Abhängigkeit von der jeweiligen Temperaturlage im Motor, die ihrerseits vom Lastzustand abhängig ist, den freien Strömungsquerschnitt des Teilkanals 4.2 mehr oder weniger freigibt. Beim Öffnen unterstützt die Bi-Metallfahne zunächst noch die Ungleichverteilung der angesaugten Ladungsmassen auf die Teilkanäle 4.1 und 4.2,so daß erst bei vollständiger Freigabe des Strömungsquerschnittes hier der richtungsbestimmte Einfluß des Teilgasstromes oder des Teilkanals 4.2 wirksam wird. Die Anordnung kann auch so angeordnet werden, daß statt einer, den freien Strömungsquerschnitt des Teilkanals 4.2 vollständig überdeckenden Bi-Metallfahne, auch nur eine Bi-Metallfahne vorgesehen werden kann, deren Breite geringer ist als die Breite des Teilkanals 4.2, so daß in der in Fig. 6 dargestellten Schließstellung der Strömungsquerschnitt des Teilkanals 4.2 nicht vollständig geschlossen ist. Anstelle nur einer den Teilkanal teilweise verschließenden Bi-Metallfahne können auch zwei oder mehrere derartiger Bi-Metallfahnen vorgesehen werden, so daß durch den Teilkanal 4.2 bei geschlossenem oder nur teilweise geöffnetem Ausgang der Gasstrom aus dem Teilkanal 4.2 in Form von "Strähnen" in den Zylinderraum einströmen und so eine Verbesserung des Gemisches erreicht werden kann.

Bei der Zuordnung einer Einspritzdüse zum Teilkanal 4.1, deren Strahlrichtung schon aus baulichen Gründen unter einem Winkel zur Achse des Einlaßkanals 4 ausgerichtet sein muß, wie dies in Fig. 1 durch den Pfeil 10 dargestellt ist, trifft ein Teil der Kraftstofftröpfchen, insbesondere größere Kraftstofftröpfchen, unmittelbar auf die Trennwand 5 auf. Dieser an sich nachteilig zu beurteilende Umstand kann insbesondere bei kaltem Motor zu einer Verbesserung der Gemischbildung genutzt werden, indem die Trennwand 5 heizbar ausgebildet wird und so die Verdampfung des Kraftstoffes verstärkt. Diese Beheizung kann beispielsweise über die Zuordnung elektrischer Widerstandsheizelemente erfolgen, so daß hier die Verdampfung der auftreffenden Kraftstofftröpfchen noch beschleunigt und die Gemischbildung verbessert wird.

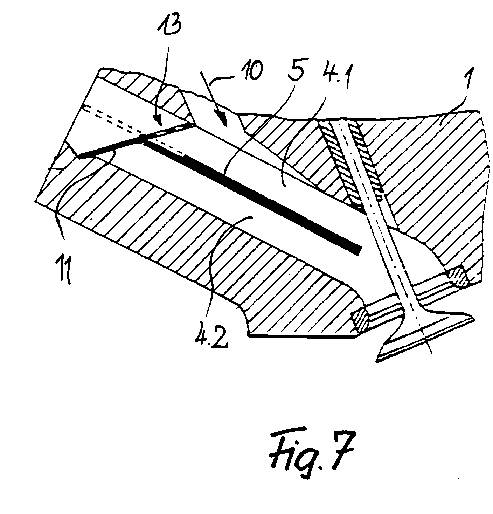

In Fig. 7 ist eine Ausführungsform gezeigt, bei der an der Trennwand 5 das Mittel 11 zur Veränderung des freien Strömungsquerschnittes Teilkanals 4.2 in herkömmlicher Weise in Form einer Drosselklappe ausgebildet ist. Diese weist erfindungsgemäß eine bis in den Querschnittsbereich des Teilkanals 4.1 reichende Verlängerung 13 auf, die beispielsweise eine gitterförmige Struktur aufweist und damit Turbulenzen in der durch den Teilkanal 4.1 fließenden Gasströmung erzeugt, wenn die Drosselklappe 11 den Teilkanal 4.2 teilweise oder ganz verschließt. Durch die gezielte Erzeugung eines hohen Turbulenzgrades werden die Strömungs- und Mischungsverhältnisse gerade im Teillastbetrieb verbessert. Die Gitterstruktur kann durch eine Vielzahl von Löchern, vorzugsweise durch ein Drahtgitter mit entsprechender Maschenweite gebildet werden, da die Querschnittsreduzierung durch die Verwendung dünner Drähte klein gehalten werden kann.

## Patentansprüche

1. Fremdgezündeter Hubkolbenmotor mit wenigstens einer Einlaßöffnung (3) je Zylinder, die jeweils durch ein Einlaßventil (2) verschließ- und öffenbar ist, dem ein kanalförmiger Einlaß (4) für Luft und/oder ein Luft-Kraftstoff-Gemisch zugeordnet ist, und der durch einen Einlaßkanal gebildet wird, der in einem durch die Einlaßöffnung (3) begrenzten Endbereich (9) endet, wobei der Einlaßkanal (4) zumindest über eine Teillänge zwischen einer Kraftstoffzufuhr (10) und dem Einlaßbereich (9) durch eine Trennwand (5) mit einer dem Einlaßbereich (9) zugekehrten Endkante (7) in zwei Teilkanäle (4.1, 4.2) unterteilt ist, die sich unmittelbar vor der Einlaßöffnung (3) zu dem Einlaßbereich (9) vereinigen, wobei die Teilungsebene zumindest im Einlaßbereich (9) im wesentlichen quer zur Achse (6) des Zylinders ausgebildet ist, und wobei wenigstens der erste Teilkanal (4.1) mit der Kraftstoffzufuhr (10) in Verbindung steht und Mittel vorgesehen sind, die eine steuerbare Ablenkung der Strömung beim Übertritt aus dem Einlaß (4) durch die Einlaßöffnung (3) in den Zylinder ermöglichen, dadurch gekennzeichnet, daß als Mittel zur Strömungsablenkung zumindest ein Teil der Trennwand (5) beweglich ausgebildet ist und mit einem steuerbaren Stellmittel in Verbindung steht, so daß der Abstand ihrer Endkante (7) zur Einlaßöffnung (3) im Einlaßbereich (9) veränderbar ist.

2. Hubkolbenmotor nach Anspruch 1, dadurch gekennzeichnet, daß die Trennwand (5) längsbeweglich im Einlaßkanal angeordnet ist.

3. Hubkolbenmotor nach Anspruch 1, dadurch gekennzeichnet, daß die Trennwand (5) senkrecht zu ihrer Wandfläche beweglich im Einlaßkanal angeordnet ist.

4. Hubkolbenmotor nach Anspruch 1, dadurch gekennzeichnet, daß im Bereich der der Einlaßöffnung (3) zugekehrten Endkante (7) der Trennwand (5) wenigstens eine Bi-Metallfahne (13) angeordnet ist, die bei kaltem Motor sich in den Strömungsquerschnitt des zweiten Teilkanals (4.2) unter Veränderung ihres Abstandes zur Einlaßöffnung hineinbewegt und diesen zumindest teilweise verschließt und mit zunehmender Erwärmung freigibt.

5. Hubkolbenmotor nach einem der Ansprüche 1 bis 4, dadurch gekennzeichnet, daß insbesondere bei einem Hubkolbenmotor mit Kraftstoffeinspritzung die Trennwand (5) beheizbar ausgebildet ist.

6. Hubkolbenmotor nach einem der Ansprüche 1 bis 5, dadurch gekennzeichnet, daß mindestens einer der Teilkanäle (4.1, 4.2) mit einer Abgasrückführung verbindbar ist.

7. Hubkolbenmotor nach einem der Ansprüche 1 bis 6, dadurch gekennzeichnet, daß in mindestens einem der Teilkanäle (4.1, 4.2) Turbulenz erzeugende Einbauten (13) vorzugsweise stellbar angeordnet sind.

## Claims

1. A spark-ignition reciprocating engine having at least one intake opening (3) per cylinder, which can be closed and opened in each case by an admission valve (2), with which a duct-shaped intake (4) for air and/or an air/fuel mixture is associated, and which is formed by an intake port which ends in an end region (9) defined by the intake opening (3), the intake port (4) being subdivided into two partial ducts (4.1, 4.2) at least over a partial length between a fuel supply (10) and the intake region (9) by a partition (5) having an end edge (7) facing the intake region (9), which ducts unite immediately before the intake opening (3) to form the intake region (9), the plane of division at least in the intake region (9) being designed substantially transversely to the axis (6) of the cylinder, and at least the first partial duct (4.1) being connected to the fuel supply (10) and means being provided which permit controllable deflection of the flow upon passing from the intake (4) through the intake opening (3) into the cylinder, characterised in that as means for deflecting flow at least part of the partition (5) is made movable and is connected to a controllable adjusting means, so that the distance of its end edge (7) from the intake opening (3) in the intake region (9) is changeable.

2. A reciprocating engine according to Claim 1, characterised in that the partition (5) is arranged to be longitudinally movable in the intake port.

3. A reciprocating engine according to Claim 1, characterised in that the partition (5) is arranged in the intake port so as to be movable at right-angles to its wall surface.

4. A reciprocating engine according to Claim 1, characterised in that at least one bimetallic vane (13) is arranged in the region of the end edge (7) of the partition (5) which faces the intake opening (3), which vane, when the engine is cold, moves into the flow cross-section of the second partial duct (4.2), changing the distance thereof from the intake opening, and closes it at least in part and unblocks it as the engine warms up.

5. A reciprocating engine according to one of Claims 1 to 4, characterised in that in particular in a reciprocating engine with fuel injection the partition (5) is designed to be able to be heated.

6. A reciprocating engine according to one of Claims 1 to 5, characterised in that at least one of the partial ducts (4.1, 4.2) can be connected to an exhaust gas recycling means.

7. A reciprocating engine according to one of Claims 1 to 6, characterised in that fittings (13) causing turbulence are arranged, preferably adjustably, in at least one of the partial ducts (4.1, 4.2).

## Revendications

1. Moteur à pistons à allumage commandé, avec au moins une ouverture d'admission (3) par cylindre qui peut être respectivement ouverte et fermée par une soupape d'admission (2), à laquelle est associée une admission (4) en forme de canal pour de l'air et/ou un mélange d'air et de carburant, qui est formée par un canal d'admission qui se termine en une région terminale (9) délimitée par l'ouverture d'admission (3), le canal d'admission (4) étant, au moins sur une longueur partielle entre une alimentation en carburant (10) et la région d'admission (9), subdivisé par une cloison séparatrice (5), pourvue d'un bord terminal (7) tourné vers la région d'admission (9), en deux canaux partiels (4.1, 4.2) qui se réunissent juste avant l'ouverture d'admission (3) dans la région d'admission (9), le plan de séparation étant prévu, au moins dans la région d'admission (9), sensiblement transversal à l'axe (6) du cylindre, et au moins le premier canal partiel (4.1) étant relié à l'alimentation en carburant (10) et des moyens étant prévus qui permettent une déviation asservissable de l'écoulement lors du transfert de l'admission (4) dans le cylindre par l'ouverture d'admission (3), **caractérisé** en ce que, comme moyens pour la déviation de l'écoulement, au moins une partie de la cloison séparatrice (5) est réalisée mobile et est reliée à un organe de commande asservissable de telle sorte que la distance entre son bord terminal (7) et l'ouverture d'admission (3) dans la région d'admission (9) peut être modifiée.

2. Moteur à pistons selon la revendication 1, **caractérisé** en ce que la cloison séparatrice (5) est disposée dans le canal d'admission avec possibilité de déplacement longitudinal.

3. Moteur à pistons selon la revendication 1, **caractérisé** en ce que la cloison séparatrice (5) est disposée dans le canal d'admission en étant mobile perpendiculairement à sa surface de cloison.

4. Moteur à pistons selon la revendication 1, **caractérisé** en ce qu'au moins une lame bimétallique (13) est disposée dans la région du bord terminal (7) de la cloison séparatrice (5) qui est tourné vers l'ouverture d'admission (3), lame qui, lorsque le moteur est froid, se déplace à l'intérieur de la section d'écoulement du deuxième canal (4.2) en modifiant sa distance par rapport à l'ouverture d'admission et ferme au moins partiellement ce canal, pour le libérer tandis que l'échauffement augmente.

5. Moteur à pistons selon une des revendications 1 à 4, **caractérisé** en ce que, notamment pour un moteur à pistons à injection du carburant, la cloison séparatrice (5) est réalisée avec possibilité de chauffage.

6. Moteur à pistons selon une des revendications 1 à 5, **caractérisé** en ce qu'au moins un des canaux partiels (4.1, 4.2) peut être relié à un recyclage des gaz d'échappement.

7. Moteur à pistons selon une des revendications 1 à 6, **caractérisé** en ce que des pièces d'insertion (13) produisant des turbulences, de préférence réglables, sont disposées dans au moins un des canaux partiels (4.1, 4.2).
